# EUROPEAN PATENT APPLICATION

(11) **EP 1 120 729 A2**
(43) Date of publication of application: **01.08.2001**
(21) Application number: 01300617.6
(22) Date of filing: 24.01.2001
(51) Int. Cl.: G06F 17/60

(54) **Automated transaction distribution system and method allowing selection of agents by transaction initiators**

(30) Priority: 24.01.2000 US 489722
(71) Applicant: Avaya Technology Corp., Miami Lakes, Florida 33014 (US)
(72) Inventor: Thomson, Rodney A., Westminster, Colorado 80234 (US); Fisher, Thomas A., Westminster, Colorado 80030 (US); Kohler, Joylee, Northglen, Colorado (US)
(74) Representative: Williams, David John

(57) **Abstract**

An automated transaction distribution system assigns an incoming transaction to an agent who is selected by the transaction initiator to handle the transaction based on information provided to the transaction initiator by the transaction distribution system.

## Description

### BACKGROUND OF THE INVENTION

### 1. Field of the Invention

This invention relates to automated transaction distribution systems wherein transactions are assigned to qualified agents on behalf of transaction initiators.

### 2. Description of the Prior Art

Automated transaction distribution systems use automated procedures to distribute transactions to available agents employed to handle the transactions. According to these automated procedures, an attempt is made to match a transaction to the best-qualified agent having the skills required to handle the particular requirements of the transaction. For example, Spanish language transactions are preferably distributed to Spanish speaking agents with the highest Spanish language proficiency levels, and so on. In some cases, a transaction may be distributed to an agent that is not the best qualified because better-qualified agents are occupied handling other transactions. Subsequently, the original agent may place the transaction participant on hold to await one of the better-qualified agents. For example, a transaction relating to a particular product may be initially directed to an available agent even though the agent lacks detailed knowledge of the product. If the original agent does not have the knowledge required to complete the transaction, the transaction must be redirected to another agent. In some cases, a transaction may be redirected multiple times during its lifetime until a suitable agent is found.

Transaction redirection is frustrating to transaction participants who want to conclude transactions expeditiously and do not want to repeat the same information to multiple agents. Accordingly, there is a need in an automated transaction distribution system for an agent assignment system and method that allows transactions to be matched to the most suitable agent as early as possible during transaction processing.

### SUMMARY OF THE INVENTION

The foregoing problems are solved and an advance in the art is obtained by a novel automated transaction distribution system and method for automatically selecting agents for transaction distribution while allowing a transaction initiator to manually select an agent based on agent information, which may include agent attributes (e.g., skills, skill levels, etc.), agent availability, and other criteria. The agents may be human agents or automated agents. In accordance with the inventive system and method, a group of agents is established, each of whom has particular attributes. In response to a request from a transaction initiator to initiate a transaction, the transaction initiator is provided with information about the one or more of the agents, including a listing of agent attributes, agent availability and possibly other information. The transaction initiator is then allowed to select an agent based on the provided agent information. The transaction is thereafter assigned to the selected agent for handling when the agent becomes available.

In preferred embodiments of the invention, agent information is provided in visual form to the transaction initiator. For example, the transaction initiator can be provided with a graphical representation of the group of agents and with listings of individual ones of the agents and agent information relative thereto. The agent information can be periodically updated prior to the transaction initiator selecting an agent. The agent information may include an agent identifier, a listing of agent skills, a listing of agent skill proficiency levels, a listing of agent personal background/characteristics, a listing of agents who backup an agent, a listing of transactions currently queued to an agent, time until agent availability, and an agent/transaction initiator transaction history.

In selecting an agent, the transaction initiator is preferably given several options relative to how they will wait for the selected agent to become available. For example, the transaction initiator may indicate that they will wait for the selected agent on-line. Alternatively, the transaction initiator may indicate that they will hang-up and subsequently reconnect to communicate with the selected agent. Likewise, the transaction initiator may indicate that they want to disconnect and have the selected agent re-contact the transaction initiator at an appointed time. During the time that the transaction initiator is waiting for the selected agent to become available, she/he can be given the option of selecting a new agent prior to the previously-selected agent picking up the transaction for handling. This agent may be a human agent or an automated (e.g., voice mail) agent.

If desired, transaction initiators may be allowed to make agent selections even after they have entered an automated transaction process and are waiting in a transaction queue for assignment to an agent. In that case, a menu of agents with accompanying agent information can be provided for perusal while the transaction initiator waits. If the transaction initiator sees an agent on the menu that they would like to speak with, they can select that agent, thereby opting out of automated transaction distribution.

To route the transaction to the selected agent, an agent identification code or agent telephone extension can be associated with the transaction and a direct/preferred agent routing vector can be invoked to route the transaction.

The invention can be implemented within an Internet transaction center operating in conjunction with a telephone switching apparatus. The telephone switching apparatus can be either customer premises equipment (e.g., a Private Branch Exchange) or a switch located at a telephone service provider Central Office.

### BRIEF DESCRIPTION OF THE DRAWING

The foregoing and other features and advantages of the invention will be apparent from the following more particular description of preferred embodiments of the invention, as illustrated in the accompanying Drawing, in which:
Fig. 1 is a block diagram showing relevant portions of an exemplary automated transaction distribution system constructed in accordance with the invention;
Fig. 2 is a block diagram showing agent selection menus in accordance with a preferred embodiment of the invention; and
Fig. 3 is a flow diagram showing method steps performed in accordance with the preferred embodiment of the invention to facilitate selection of agents by transaction initiators.

### DETAILED DESCRIPTION OF THE PREFERRED EMBODIMENT

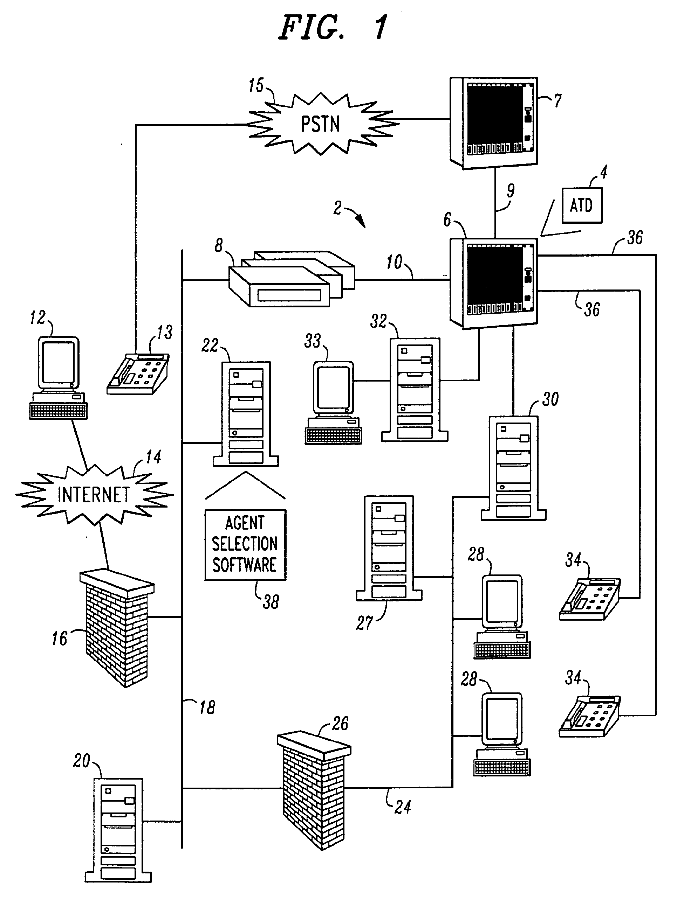

Turning now to the figures, wherein like reference numerals represent like elements in all of the several views, Fig. 1 illustrates an exemplary transaction center 2. The transaction center 2 is adapted, by way of example only, to function as an Internet transaction center that is capable of receiving transactions via the Internet and via the Public Switched Telephone Network (PSTN). The Centre Vu® Internet Solutions product line from Lucent Technologies, Inc. (Lucent) represents one commercial system that could be used to implement the transaction center 2 in accordance with the invention described herein. As is conventional, the transaction center 2 utilizes an Automated Transaction Distribution (ATD) system 4 that can be deployed in a Private Branch Exchange (PBX) 6, or as an adjunct thereto running on a separate platform, such as a data network server (not shown). Alternatively (also not shown), the ATD system 4 can be implemented at a Central Office (CO) maintained by a telephone service provider at a location that is remote from the transaction center 2. In a PBX environment, the ATD system 4 can be implemented using Lucent's DEFINITY® Enterprise Communications System (ECS) automated transaction distribution product running Lucent's CentreVu® Advocate software. In a CO environment, the ATD system 4 can be implemented using Lucent's Pinnacle® automated transaction distribution system. In the description which follows, a PBX implementation of the invention is described for purposes of illustration only.

The PBX 6 can receive transaction communications over a plurality of communication pathways. These pathways may include one or more switching or routing entities, such as a Public Switched Telephone Network (PSTN) switch 7 or one or more Internet Telephony Gateways (ITGs), such as ITGs 8. A conventional trunk group 9 provides PSTN voice and facsimile communications between the PBX 6 and the aforementioned PSTN switch 7. A Primary Rate ISDN (PRI) trunk group 10 provides Voice-over-Internet (VoIP) communications between the PBX 6 and the ITG(s) 8.

In the context of the present invention, a transaction initiator host device 12, such as a network-capable personal computer, is assumed to communicate with the transaction center 2 via the Internet 14, on behalf of a transaction initiator. The transaction initiator could also have a conventional telephone 13 for communicating over the PSTN 15. In a preferred configuration, the transaction center 2 is connected to the Internet via a TCP/IP Router/Firewall 16 that provides a point of entry to a publicly-accessible LAN 18 of the type that is commonly referred to in network security parlance as a DeMilitarized Zone (DMZ). The DMZ 18 comprises several host devices including a web server 20 that serves transaction center web pages to the public, and an Internet Control Manager (ICM) server 22 that, among other things, controls agent login sessions and forwards transaction requests to the ATD system 4.

Located behind the DMZ 18 is a private LAN 24 that communicates with the DMZ 18 via a firewall 26. An email/facsimile server 27 resides as a host on the private LAN 24. Additional hosts on the private LAN 24 include a plurality of agent terminals 28 and a Computer Telephony Interface (CTI) server 30 that connects the private LAN 24 to the ATD system 4. The CTI server 30 may be implemented using Lucent's CentreVu® CT/Message Care Server product. The LAN 24 supports email communications between the email side of the email/facsimile server 10 and the CTI server 30. The LAN 24 also supports facsimile communications between the facsimile side of the email/facsimile server 10 and the CTI server 30. A Call Management System (CMS) server 32 having an associated CMS terminal 33 conventionally functions to maintain transaction records and transaction center statistics for use in managing the transaction center 2 and in generating transaction center operational reports. It is connected to the PBX 6 and communicates with the ATD system 4.

During transaction center operations, agents employed at the transaction center 2 login at agent terminals 28. In addition, each agent is provided with a conventional telephone 34 (or a non-conventional telephone, such as a "soft-phone") that is connected to the PBX 6 via a voice communication pathway 36. Each agent session is maintained and monitored by software running on the ICM server 22. This software causes agent and transaction control windows to be displayed on each agent's terminal 28 and updates those windows based on agent login status. The ICM server 22 also maintains connections between the agent terminals 28 and transaction initiator host devices, such as the host device 12. In the Lucent Centre Vu® Internet Solutions product, the ICM server 22 additionally provides such functions as escorted browsing, whereby agents and transaction initiators are able to simultaneously view the same web pages on the web server 20 under the direction ("escort") of the agent.

As is known, transaction initiators communicating with the transaction center 2 over the Internet 14 normally initiate passive contact by browsing web pages served by the web server 20. At least one of the web pages invites the transaction initiator 12 to activate a graphical selection indicator (such as a hypertext link) if the transaction initiator 12 desires to contact a transaction center agent. If the transaction initiator 12 selects this indicator, the web server 20 notifies the ICM server 22 that agent contact is desired. As is also known in the art, the ICM server 22 typically serves a web page requesting the transaction initiator 12 to provide certain transaction information, such as demographics data and the nature of the transaction initiator's query. The ICM server 22 also conventionally requests the transaction initiator 12 to specify the desired mode of communication, i.e., voice, text chat, email, facsimile, etc. Once the foregoing transaction information is input by the transaction initiator, the ICM server 22 operates in conjunction with the CTI server 30 and the ATD system 4 to queue the transaction for assignment to an agent. In addition to its participation in this transaction launching, the CTI server 30 also conventionally logs agents into the ATD system 4, monitors transaction routing therethrough, and reports events such as "agent answer," "transaction drop" and "transaction transfer" back to the ICM server 22.

Regardless of the communication mode selected by transaction initiators, prior art automated transaction distribution systems process the arriving transactions and attempt to assign them to the agents who have the best skill match relative to the transaction information provided by the transaction initiators. More specifically, each incoming transaction is processed and assigned to a selected transaction queue. Each transaction queue is typically associated with transactions having particular requirements. The transactions awaiting handling in each transaction queue are normally routed to a primary agent group that is assigned responsibility for the queue. If there are no available agents in the primary agent group, an agent in a secondary agent group may be assigned to handle a transaction. In either case, the agent assigned to handle a transaction may not be the best qualified agent. As indicated in the Background section above, the result is that transactions may be assigned multiple times before a suitable agent is found.

The principal limitation of prior art automated transaction distribution systems is that they do not allow humans to select the best match for a transaction, based on human evaluations and assessments. For example, a human may be able to evaluate a transaction center situation (e.g., the number of transactions queued to various agents) and assess agent criteria to determine the best match for the transaction. Humans are able to make these evaluations and assessments today based on their objective and subjective perceptions of given scenarios. For example, people choose check-out lines at stores based on their evaluation of the skills of check-out agents, the number of people queued at each check-out stand, and the volume related to each transaction. Based on these evaluations and assessments, people choose the checkout stand that appears to be the best match for the transaction. People are also allowed to change their mind based on changing circumstances. For example, a person may change check-out lines based on a blinking light at a check-out stand. That blinking light is a signal that an intervention is required on the current transaction that affects such parameters as delay time, which may cause a person to switch to another check-out line.

Similarly, in a banking scenario, a person walks into a bank and must make several choices and assessments. A person will need to know if she/he is interested in a loan or making an account transaction. Based on this knowledge the person narrows down the set of agents with whom the person will interact. For example, if the person is interested in a loan, the person will walk towards the loan department. A person may also assess which agent the person will deal with within the selected department. For example, if the person has already dealt with a certain agent, the person may choose to wait for the agent to become available even if other agents are available. The person, however, may observe that several other people are waiting to deal with that agent and select another agent to deal with her/his needs. In addition to a loan transaction, the same person may need to make a transaction related to a Certificate of Deposit (CD). In this scenario, the person will want to choose an agent that is skilled in loans and CDs to minimize the number of agents the person has to deal with and to reduce the amount of time the person spends in the bank.

The present invention automates these natural human interactions between transaction initiators and transaction center agents. Using agent selection software 38 running on the ICM server 22 (or on any other suitable platform associated with the transaction center 2), transaction initiators are allowed to make personal assessments of transaction center resources, and based on these assessments, select agents with whom they wish to interface. The selection criteria can be based on a variety of factors, such as agent identity and qualifications, transaction center dynamics (e.g., the number of transactions already queued to various agents), and other factors.

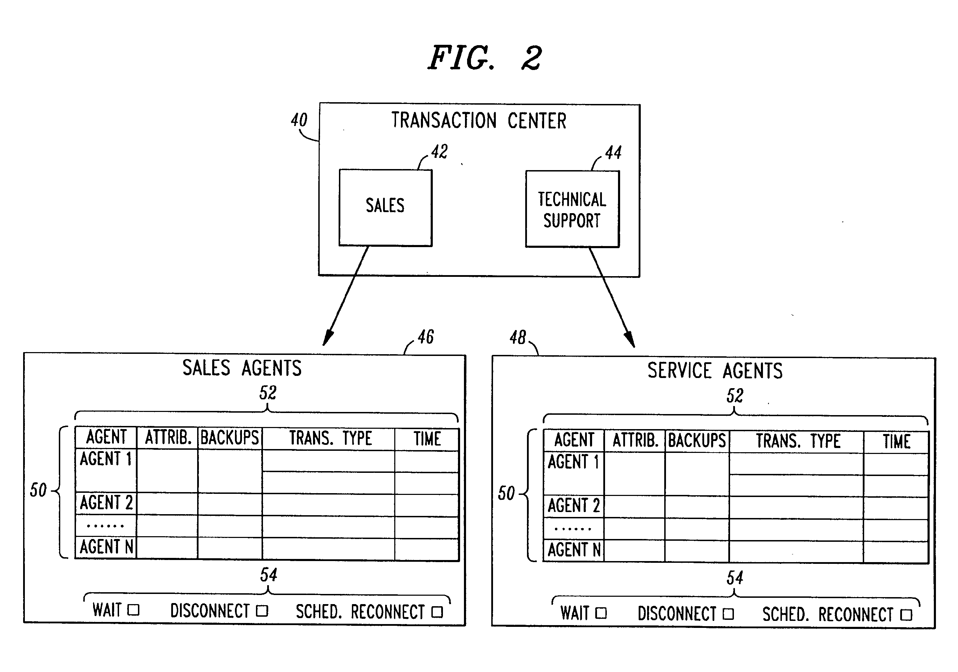

In order for the transaction initiator to make her/his agent selection(s), agent information needs to be provided to the transaction initiator in suitable fashion. It is preferred that the presentation be visual, although other communication modes, such as audio messages, could also be used. The choice is up to the transaction center administrator and the type of information presented will depend on several factors, including the business needs of the transaction center, the type of transaction initiator, the type of agent, and the mode of communication. As shown by way of example in Fig. 2, the agent selection software 38 can be configured to provide the transaction initiator 12 with a visual representation of the transaction center 2. This visual representation preferably includes one or more interlinked web pages. By way of example, a root web page 40 can be used to provide general transaction center enterprise information, such as the identity of transaction center divisions 42 and 44 (corresponding to sales and technical support, respectively), as well as environmental information, such as current transaction center status. Branching web pages 46 and 48 may then be respectively provided for each transaction center division (and/or subdivisions thereof). Each branching web page 46 and 48 pertaining to a transaction center division (or subdivision) may preferably include a listing 50 of available agents assigned to that division. There may be associated with each agent a listing 52 of agent information (criteria) that a transaction initiator can use in order to make an informed agent selection decision. This agent information could include an agent identifier ("Agent") such as the agent's name (if the agent is human) or the agent type (if the agent is automated). A listing of agent attributes ("Attrib.") may also be provided. This listing may include agent skills, skill proficiency levels, personal background information/characteristics (see example below) and any other relevant information that will help a transaction initiator to make an assessment as to who is the best qualified agent. The agent information may also include a list of other agents who the agent normally backs up or fills in for, or who back up or fill in for the agent (" Backups" ). This will allow the transaction initiator to select other qualified agents who may be available sooner. The agent information may also describe the agent's transaction handling priorities. Each agent may be handling several transactions (see Agent 1 in Fig. 2), either simultaneously (e.g., the agent is handling multiple text chat transactions) or sequentially (e.g., multiple voice transactions are queued to the agent for sequential handling). As such, the agent's transaction handling priority information may include a listing of the transactions (by type) currently being handled by the agent ("Trans. Type"), and the estimated time for the agent to complete each transaction ("Time"). Relative to the latter, the transaction communication mode (e.g., fax, voice, e-mail, etc.) of the agent's pending transactions can be used by the agent selection software 38 to determine the amount of time required to handle such transactions. The characteristics of each pending transaction may also be used by the agent selection software 38 to assess the length of time required by the agent to handle a transaction. For example, at a transaction center for a bank, a transaction that involves a loan and a CD request would typically require a longer handling time than a checking account transaction.

The content and manner in which information is provided to the transaction initiator may differ depending on whether the transaction initiator is a member of the general public, or has special "privileges," such as an agent identification number given to the transaction initiator during a prior transaction. For example, a member of the general public may receive only general agent information, whereas a transaction initiator with an agent identification number may be allowed to see more detailed information, such as the agent's work schedule, alternative contact numbers, etc.

Another feature that can be added is a visual indicator that identifies agents who have served the transaction initiator on previous occasions. For example, such agents could be highlighted in the web pages 46 and 48, e.g., by displaying their entries in a different color. A hyper link or meta tag could be used to allow the transaction initiator to " click" on the highlighted agent entry (using a mouse or other input device) to retrieve information about the previous transaction(s), i.e., an agent/transaction initiator transaction history.

Once the transaction initiator selects an agent, the ICM server 22 preferably assigns an agent identification code or agent telephone extension to the transaction and then routes the transaction to the ATD system 4 using conventional direct/preferred agent processing. Direct/preferred agent processing is available in Lucent's CentreVu® Internet Solutions product line. It is used for repeat transactions between the same transaction initiator and agent, and requires that the transaction initiator have knowledge of the agent's identification code or telephone extension. This information is needed during transaction routing vector processing by the ICM server 22 in order to obtain transaction route information from the CTI server 30, so that the transaction can be routed directly to the identified agent rather than sending it to a normal automated transaction distribution queue. In accordance with the present invention, it is expected that the agent identification code and telephone extension will not typically be known by the transaction initiator. Thus, the ICM server 22 will automatically insert this information into the transaction routing vector when the agent selection is made.

Information about available agents is maintained in the ICM server 22, which as described above, is responsible for managing agent login sessions. Basic agent information that is relatively static, such as an agent's name and attributes, does not normally need to be updated in the ICM server 22 during transaction processing. Other information, such as the identities of currently logged-in agents, their transaction backlogs, and their availability times, is dynamic in nature and needs to be periodically updated in the ICM server 22. This periodic updating is preferably performed throughout the time period that the transaction initiator is allowed to select agents, so that the agent information presented to the transaction initiator is always current. The updated dynamic agent information in the ICM server 22 can be derived from existing operational information that is provided, for example, by the CMS 32.

To aid in the selection process, the agent selection software 38 can be configured (e.g., by a transaction center administrator) to assist the transaction initiator by limiting (filtering) the set of the selection options in response to transaction information provided by the transaction initiator. For example, if an agent is not qualified to handle a certain transaction need, the agent will not be included in the list of available agents and the transaction initiator will not be able to select that agent. If an agent is not likely to be available for some time due to a large number of assigned transactions, or because the agent is otherwise unavailable (e.g., on a break, on vacation, etc.) the agent should also not be listed. The agent selection software 38 can also be configured to integrate transaction selection with the distribution of agent work loads while ensuring that transactions are handled based on business specified criteria (e.g., service objectives). For example, under-burdened agents can be made available for selection whereas overburdened agents are excluded.

The agent selection software 38 can be further configured to provide the transaction initiator the ability to change an agent selection based on dynamic activities within the transaction center (e.g., expected wait time for agents). For example, if a selected agent is delayed in handling a transaction based on transaction center dynamics, the transaction initiator may wish to select another agent who can handle the transaction in less time. Therefore, after a transaction initiator selects an agent, or following automated agent selection if the transaction initiator does not opt for selection, it is preferable that the agent selection web pages remain active, with periodic updating being performed to alert the transaction initiator to changing conditions. For example, the agent selection software 38 could be configured so that the transaction initiator is presented with a graphical representation showing the transaction initiator's position in a queue of transactions assigned to the selected agent, along with a menu of agent selection change options. If the transaction initiator selects a new agent, the previous agent selection is cancelled and the transaction initiator is removed from queuing to the previous agent.

The ability to select an automated " self-service" agent, such as a voice-mail agent can also be provided. This option could be provided for transaction initiators who do not wish to wait for a human agent. Selection of an automated agent could be allowed as an initial menu option and could also be permitted while the transaction initiator is waiting for a human agent following either manual or automated selection.

The agent selection software 38 may also be configured to provide the ability for transaction(s) to be associated with agent(s) while the transaction initiator waits for the transaction to be handled, or for transaction(s) to be associated with agent(s) while the transaction initiator does not wait for transaction handling (e.g., disconnect with subsequent reconnect, or disconnect with scheduled agent-initiated reconnect). As shown in Fig. 2, selection indicators for these options may be displayed on the web pages 46 and 48, as shown by reference numeral 54.

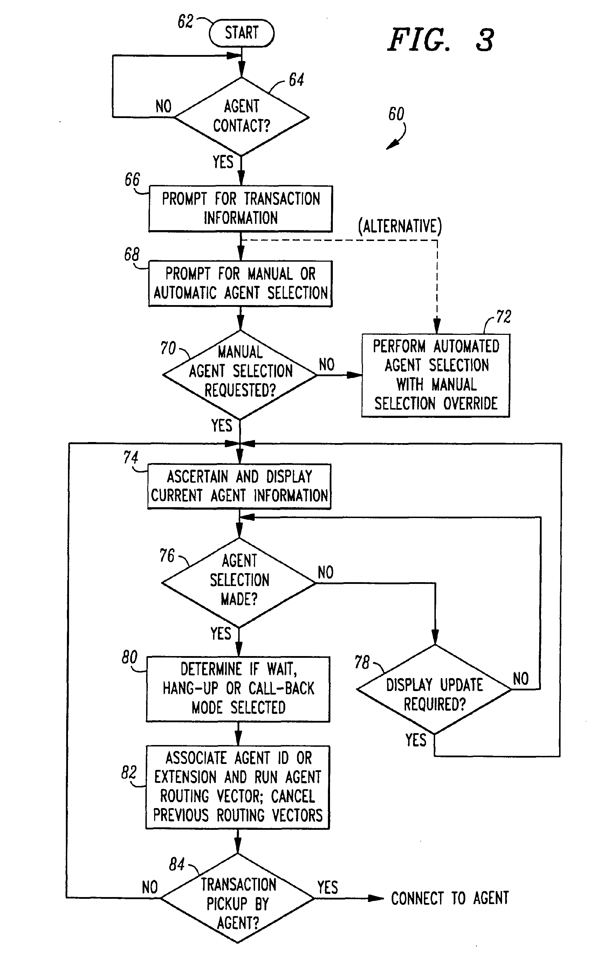

Turning now to Fig. 3, a flow diagram 60 illustrates a sequence of processing steps that can be performed by the agent selection software 38 in accordance with the invention. Starting at step 62, a test is made in step 64 for a message from the web server 20 advising that a transaction initiator has requested contact with an agent. If such a request is made, the transaction initiator is prompted in step 66 to provide relevant transaction information. The transaction initiator is also prompted in step 68 to indicate whether manual or automatic agent selection is desired. Alternatively, the system may default to automated transaction distribution with manual selection override (described below relative to step 72). If manual or automated selection is prompted in step 68, a test of the transaction initiator's input is made in step 70. If the transaction initiator elected automatic selection, normal automated transaction routing is performed in step 72. However, the transaction initiator is preferably given the option of resorting to manual agent selection. This provides a manual selection override feature that can be used, for example, if the transaction initiator is tired of waiting, or has been assigned to an unsuitable agent and no longer wants to rely on the automated system. The agent selection software 38 can thus be configured to provide manual agent selection capability at any time after a transaction initiator has been placed in a transaction queue and is awaiting automated transaction distribution. A menu of agents with accompanying agent information can be provided for perusal while the transaction initiator waits. If the transaction initiator finds an agent on the menu that they would like to speak with, they can manually select that agent, thereby opting out of automated transaction distribution. As previously described, the agent can be either human or automated.

If manual agent selection is elected, current agent information is ascertained, filtered if necessary, and displayed to the transaction initiator in step 74. In steps 76 and 78, the agent selection software 38 waits for the transaction initiator to select an agent and updates the agent information as required prior to selection being made. As described above, the agents available for selection may include both human and automated agents. If an automated agent is selected, the transaction initiator would be immediately connected to the agent for transaction processing. If a human agent is selected, step 80 determines whether the transaction initiator wishes to wait for the agent, disconnect and reconnect at a later time, or schedule a time for the agent to initiate reconnection. In step 82 the selected agent's identification code or telephone extension is associated with the transaction and a direct/preferred agent transaction routing vector is invoked. Any previous routing vectors for this transaction initiator are canceled. This cleans up the queuing to a previous agent if an agent reselection was made in step 76. In step 84, after an appropriate pause, a test is made whether the agent has picked up the transaction for handling. If not, processing returns to step 74 so that agent reselection can be performed by the transaction initiator, if desired. Once the agent picks up the transaction a connection is made to the agent and agent selection processing terminates relative to the transaction initiator.

The following example illustrates these and other processing functions performed by the agent selection software 38. Assume that a person is concerned about a symptom that she/he believes is related to a form of cancer. The person contacts a health organization's transaction center over the Internet. The person peruses the health center web site looking for information on a particular type of cancer. After reviewing the information, the person wants to talk directly to an agent and makes a request to see the health center agents and the associated agent criteria. The person views the qualifications of the agents and determines that she/he wants to talk with a particular agent who has knowledge of the particular type of cancer, is a cancer survivor of that particular type of cancer, and is the same gender as the person contacting the health center.

Assume further that the selected agent is expected to be available for interactive text chat with the person contacting the health center in several minutes, so the person decides to wait for the agent. When the agent becomes available, the agent and the person contacting the health center communicate over an interactive text chat session. Alternatively, the person contacting the health center may choose to place a voice call directly to the selected agent.

The person contacting the health center may find that the desired agent will not be available for several hours (e.g., the agent is in a meeting). If the person contacting the health center only wants to talk with that particular agent, she/he may schedule an agent-initiated (or outbound dialer-initiated) reconnection at a specific time in the future using one of the selection indicators 54. Prior to the time that the reconnection is scheduled, the agent is notified of the reconnect request by way of a screen message that is caused to be generated at the agent's terminal 28 by the ICM server 22. The screen message preferably includes information related to the transaction. If the agent is available at the scheduled reconnection time, the agent can initiate the reconnection (manual or automatic) and communicate with the person who contacted the health center. If the agent is not available at reconnection time, reconnection will be delayed until the agent does become available. Alternatively, the transaction initiator may reconnect to determine the agent's availability in order to assess whether to continue waiting or perhaps select a new agent.

An alternative for a transaction initiator waiting for transaction handling, is for the transaction initiator to select an agent and then disconnect. The transaction will remain waiting for the agent in the ATD system 4 while the transaction initiator does not wait. The transaction initiator may then reconnect at a later point in time and check the current status of her/his transaction. If the transaction will be waiting longer, the transaction initiator can disconnect again and re-connect at a later time. Alternatively, the transaction initiator can choose to wait for the agent after re-connection. In either case, the agent selection software 38 maintains the transaction initiator's place in the agent's transaction queue so that the transaction initiator does not lose her/his "place in line." If the transaction initiator is not connected at the time of the transaction is ready to be handled by the agent, the transaction initiator may be called back or the transaction set aside until the transaction initiator re-connects. After the transaction initiator re-connects, the transaction can be handled based on the agent's workload criteria and the transaction's priority relative to other transactions that have been set aside.

Accordingly, an automated transaction distribution system and method have been described that provides natural human interaction with agents at a transaction center by allowing transaction initiators to make agent selections based on objective as well as subjective factors. While various embodiments of the invention have been disclosed, it should be apparent that many variations and alternative embodiments could be implemented in accordance with the invention. For example, the invention could be implemented to allow a transaction initiator to select multiple agents, especially in the case where multiple tasks need to be performed on behalf of the transaction initiator. It is understood, therefore, that the invention is not to be in any way limited except in accordance with the spirit of the appended claims and their equivalents.

## Claims

1. In an automated transaction distribution system in which transactions are assigned to agents using automated agent skill matching procedures, a method allowing manual selection of agents by transaction initiators, comprising the steps of:
in response to a request from a transaction initiator to initiate a transaction, providing said transaction initiator with information about one or more agents having agent attributes, said information including said agent attributes;
allowing said transaction initiator to manually select an agent based on said information; and
assigning said transaction to said selected agent for handling when said selected agent becomes available.

2. An automated transaction distribution method in accordance with Claim 1 wherein said information providing step includes providing visual information to said transaction initiator.

3. An automated transaction distribution method in accordance with Claim 1 wherein said information providing step includes providing a graphical representation of said group of agents and listings of individual ones of said agents and agent information relative thereto.

4. An automated transaction distribution method in accordance with Claim 3 wherein said information providing step includes periodically updating said agent information prior to said transaction initiator selecting said selected agent.

5. An automated transaction distribution method in accordance with Claim 1 wherein said agent information includes an agent identifier, a listing of agent skills, a listing of agent skill proficiency levels, a listing of agent personal background/characteristics, a listing of agents who backup an agent, a listing of transactions currently queued to an agent, time until agent availability, and an agent/transaction initiator transaction history.

6. An automated transaction distribution method in accordance with Claim 5 wherein transaction center enterprise and environmental information are provided to said transaction initiator in addition to said agent information.

7. An automated skill-based routing method in accordance with Claim 1 wherein said agent selection step includes allowing said transaction initiator to indicate that they will wait for said selected agent on-line.

8. An automated transaction distribution method in accordance with Claim 1 wherein said agent selection step includes allowing said transaction initiator to indicate that they will disconnect and subsequently reconnect to communicate with said selected agent.

9. An automated transaction distribution method in accordance with Claim 1 wherein said agent selection step includes allowing said transaction initiator to indicate that they want to disconnect and have said selected agent initiate reconnection at an appointed time.

10. An automated transaction distribution method in accordance with Claim 1 wherein said agent selection step includes allowing said transaction initiator to select a new agent prior to said selected agent picking up said transaction for handling.

11. An automated transaction distribution method in accordance with Claim 1 wherein said agent selection step includes allowing said transaction initiator to select multiple agents for performing either the same or different tasks.

12. An automated transaction distribution method in accordance with Claim 1 further including the step of receiving transaction information from said transaction initiator and using said transaction information to determine said one or more agents for whom information will be provided to said transaction initiator and the type of information presented.

13. In an automated transaction distribution system in which transactions are assigned to agents using automated skill matching procedures, a system for allowing manual selection of agents by transaction initiators comprising:
means responsive to a request from a transaction initiator to initiate a transaction, for providing said transaction initiator with information about one or more agents having agent attributes, said information including said agent attributes;
means for allowing said transaction initiator to manually select an agent based on said information; and
means for assigning said transaction to said selected agent.

14. An automated transaction distribution system in accordance with Claim 13 wherein said information providing means includes means for providing visual information to said transaction initiator.

15. An automated transaction distribution system in accordance with Claim 13 wherein said information providing means includes means for providing a graphical representation of said group of agents and listings of individual ones of said agents and agent information relative thereto.

16. An automated transaction distribution system in accordance with Claim 13 wherein said information providing means includes means for periodically updating said agent information prior to said transaction initiator selecting said selected agent.

17. An automated transaction distribution system in accordance with Claim 16 wherein said agent information includes an agent identifier, a listing of agent skills, a listing of agent skill proficiency levels, a listing of agent personal background/characteristics, a listing of agents who backup an agent, a listing of transactions currently queued to an agent, time until agent availability, and an agent/transaction initiator transaction history.

18. An automated transaction distribution system in accordance with Claim 17 further including means for providing transaction center enterprise and environmental information to said transaction initiator in addition to said agent information.

19. An automated transaction distribution system in accordance with Claim 13 wherein said agent selection means includes means for allowing said transaction initiator to indicate that they will wait for said selected agent on-line.

20. An automated transaction distribution system in accordance with Claim 13 wherein said agent selection means includes means for allowing said transaction initiator to indicate that they will hang-up and subsequently reconnect to communicate with said selected agent.

21. An automated transaction distribution system in accordance with Claim 13 wherein said agent selection means includes means for allowing said transaction initiator to indicate that they want to disconnect and have said selected agent initiate reconnection at an appointed time.

22. An automated transaction distribution system in accordance with Claim 13 wherein said agent selection means includes means for allowing said transaction initiator to select a new agent prior to said selected agent picking up said transaction for handling.

23. An automated transaction distribution system in accordance with Claim 13 wherein said agent selection means includes means for allowing said transaction initiator to select multiple agents for performing either the same or different tasks.

24. An automated transaction distribution system in accordance with Claim 13 further including means for receiving transaction information from said transaction initiator and using said transaction information to determine said one or more agents for whom information will be provided to said transaction initiator and the type of information presented.

25. An automated transaction distribution method allowing manual selection of agents by transaction initiators, comprising the steps of:
in response to a transaction being initiated by a transaction initiator, routing said transaction to a transaction queue for automated transaction processing;
while said transaction is pending in said transaction queue, presenting a menu of agents for manual selection by said transaction initiator, said menu providing said transaction initiator with information about said agents, including agent attributes;
allowing said transaction initiator to manually select an agent from said menu based on said information;
if an agent is selected, assigning said transaction to said selected agent for handling when said selected agent becomes available; and
in an absence of said transaction initiator manually selecting an agent, automatically assigning said transaction to an agent based on said agent attributes.

26. In an automated transaction distribution system, a method for transaction distribution allowing manual selection of agents by transaction initiators, comprising the steps of:
establishing a group of agents each of whom has particular transaction attributes;
providing graphical information about said group of agents and about one or more of said agents in said group to a transaction initiator who is communicating with said transaction center via a data network and who desires to initiate a transaction with one of said agents, said information including said agent attributes;
providing graphical indicators allowing said transaction initiator to manually select an agent based on said graphical information and to specify the manner in which said transaction initiator will wait for said selected agent;
assigning said transaction to said selected agent;
if said transaction initiator is connected to said transaction center when said selected agent becomes available to handle said transaction, connecting said transaction initiator to said agent; and
if said transaction initiator is not connected to said transaction center when said selected agent becomes available to handle said transaction, prompting said agent about said transaction so that said agent may take appropriate action to communicate with said transaction initiator.

27. An automated transaction distribution method allowing manual selection of agents by transaction initiators, comprising the steps of:
handling a plurality of transactions by any of said agents in an absence of selection of a particular agent by an initiator of a transaction;
providing said initiator with information about said plurality of agents, including attributes of said agents;
allowing said initiator to select an agent of said plurality of agents based on said information; and
in response to a selection by said initiator, assigning said transaction to the selected agent for handling.
